# EUROPEAN PATENT APPLICATION

(11) **EP 2 124 305 A1**
(43) Date of publication of application: **25.11.2009**
(21) Application number: 08702795.9
(22) Date of filing: 21.01.2008
(51) Int. Cl.: H02B 13/02, H01C 7/12

(54) **ARRESTOR**

(30) Priority: 22.01.2007 JP 2007011873; 22.01.2007 JP 2007011874; 22.01.2007 JP 2007011875; 11.01.2008 JP 2008004466
(71) Applicant: SWCC SHOWA CABLE SYSTEMS CO., LTD., Tokyo 105-0001 (JP)
(72) Inventor: ADACHI, Kazuhisa, Tokyo 105-0001 (JP); SEMA, Nobuyuki, Tokyo 105-0001 (JP)
(74) Representative: Glawe, Delfs, Moll
(86) International application number: PCT/JP2008/000054
(87) International publication number: WO 2008/090735

(57) **Abstract**

An interfacial pressure at the interface between the inner peripheral surface of a receiving port of a fixed bushing and the outer peripheral surface of the fore-end part of an insulation sleeve is ensured. The arrester of this invention is provided with the insulation sleeve (1) having a conductor (2) at its fore-end part, an arrester elements stack (4) inserted in an inside of the insulation sleeve (1) through a high-voltage electrode (3), an earthed electrode (5) arranged at the rear-end part side of the arrester elements stack (4), a coil-shaped spring (8) arranged at the rear-end part side of the earthed electrode (5) concentrically to the insulation sleeve (1), a metal case (6) surrounding the insulation sleeve (1), the earthed electrode (5) and the spring (8), and a sealing member (7) installed at the opening port of the rear-end part side of the metal case (6). The outer diameter of the rear-end part side of the insulation sleeve (1) is smaller than the outer diameter of the center part of the insulation sleeve (1) . Also, a tapered outer surface (13) is provided at the outer circumference of the fore-end part (11) of the insulation sleeve (1).

## Description

### TECHNICAL FIELD

The present invention relates to an arrester. In particular, the present invention relates to the arrester which is able to attempt the miniaturization and the weight-saving of an insulation sleeve which houses an arrester elements stack, ensure the interfacial pressure between an inner peripheral surface of a receiving port of a fixed bushing and an outer peripheral surface of a fore-end part of an insulation sleeve, and prevent the dielectric breakdown at the aforementioned interface.

### BACKGROUND ART

In general, in gas insulated switchgear installed in a power plant or a substation, etc. , an arrester is arranged to protect electric equipments such as switchgears or transformers from abnormal voltage which invades through a power cable line when such as thunderbolt occurs.

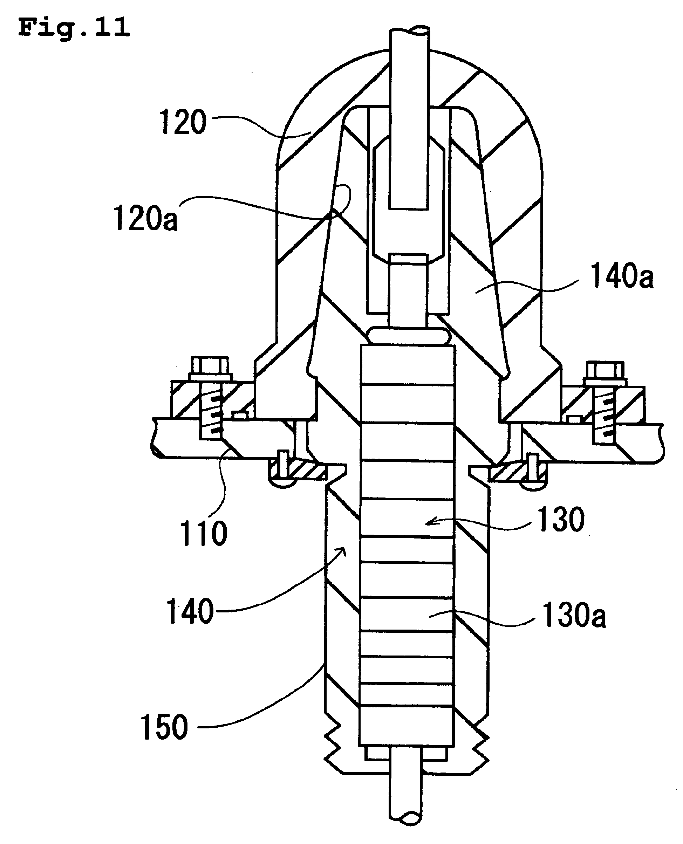

Heretofore, as the arrester of this type, as shown in Fig.11, the arrester which attached a fixed bushing 120 to an inner wall of an equipment case 110 in the air tight and attached a fore-end part 140a of an insulation sleeve 140 which housed an arrester elements stack 130 in a receiving port 120a of this fixedbushing 120 byplug-in system is known (for example, refer to patent document No.1).

However, in the arrester of such composition, there were following difficult points.

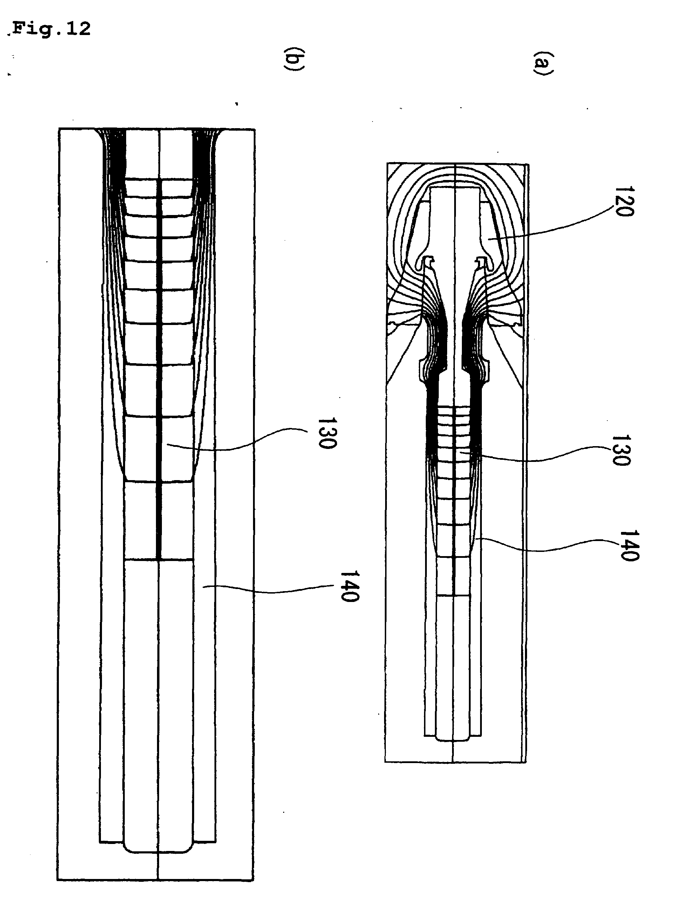

First, because an electric potential distribution is decided by a positional relation between the arrester elements stack 130 and a shielding layer 150 which is provided at an outer circumference of the insulation sleeve 140, when an outer diameter of the insulation sleeve 140 is thin, as shown in an equipotential distribution drawing of Fig.12, there was a difficult point that a electric field concentrates at a high-voltage side of the arrester elements stack 130.

Second, when high current (a ground-fault current which exceeds a nominal discharge current extremely) flows to the arrester, there is a case that an arrester element 130a is destroyed. In such a case, a shock wave which occurs in an inside of the insulation sleeve 140 propagates to the insulation sleeve 140, and thereby, the insulation sleeve 140 might be destroyed and neighboring equipments of the arrester might be damaged by scattering of such as the arrester element 130a or parts. And, in the arrester of such composition, because predefined interfacial pressure cannot be given between arrester elements 130a, when such as carrying the arrester, such as the vibration of the arrester element 130a might occur.

Third, because each component of the arrester is composed of solid insulator, it is necessary to apply the predefined interfacial pressure to an interface between the inner peripheral surface of the receiving port 120a of the fixed bushing 120 and the outer peripheral surface of the fore-end part 140a of the insulation sleeve 140.

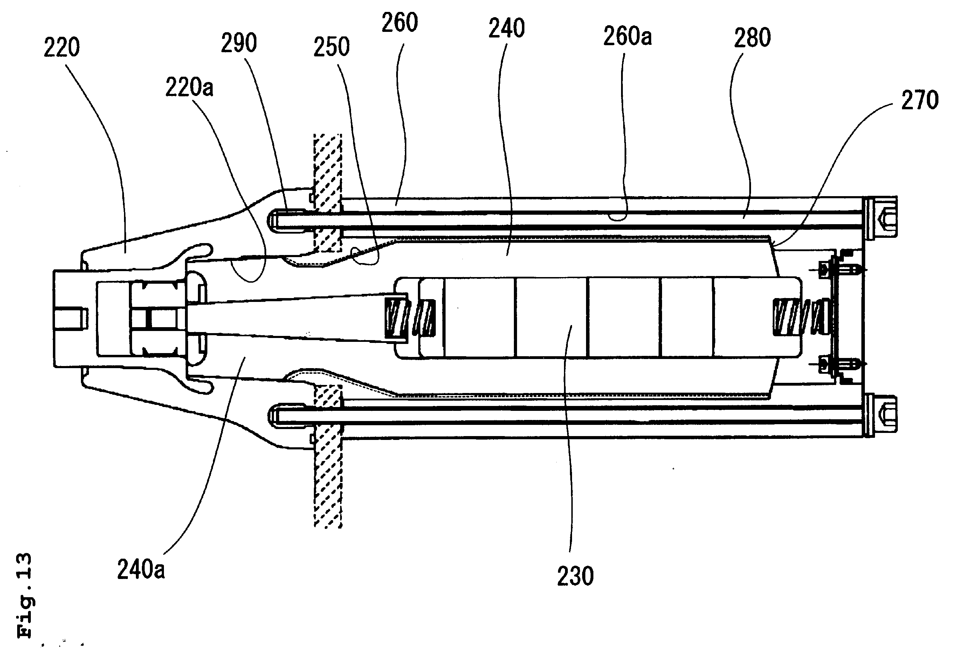

As for the first difficult point, as shown in Fig.13, a solid insulated plug-in arrester whose outer diameter of an insulation sleeve 240 is thick is originated. In this plug-in arrester, as well as the abovementioned plug-in arrester, a fore-end part 240a of an insulation sleeve 240 which housed an arrester elements stack 230 in a receiving port 220a of a fixed bushing 220 is attached by plug-in system.

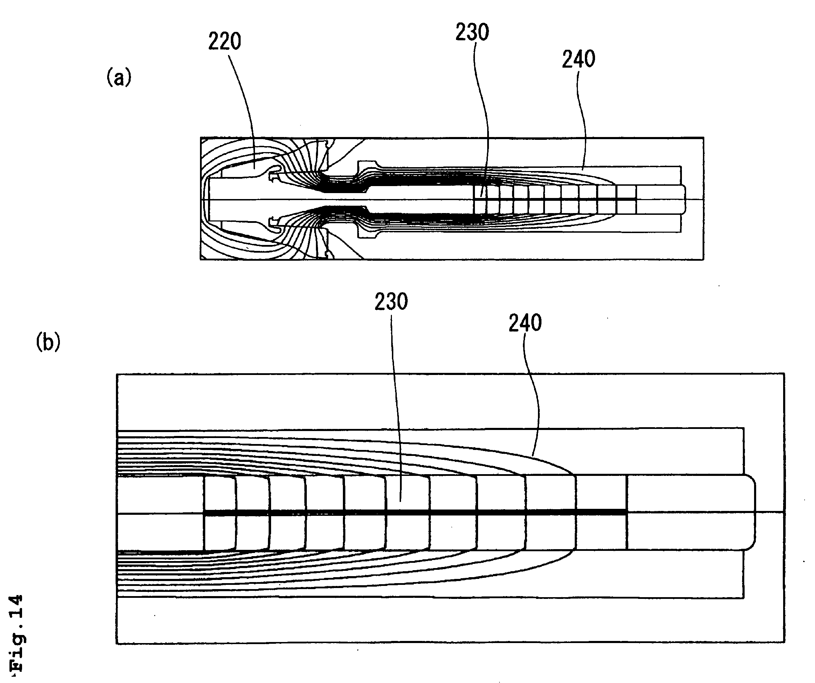

According to the solid insulated plug-in arrester of such composition, as shown in the equipotential distribution drawing of Fig.14, although the concentration of the electric field in the high-voltage side of the arrester elements stack 230 can be eased, there were following difficult points.

That is, when enlarging the outer diameter of the insulation sleeve 240, that is, when enlarging the outer diameter of a shielding layer 250 which is provided at the outer periphery of the insulation sleeve, the diameter of a metal case 260 which surrounds such as the insulation sleeve 240 also becomes large. And in response to this, the weights of the insulation sleeve 240 and the metal case 260 became heavy, besides, the working property of assembling of the arrester becomes bad, and furthermore, the costs of the materials become expensive. And, when enlarging the outer diameter of the insulation sleeve (the shielding layer 250) 240, the outer diameter of the insulation sleeve 240 becomes larger than the inner diameter of the receiving port 220a (the bore diameter of the receiving port 220a) of the fixed bushing 220. Therefore, when arranging a pressure mechanism 270 for giving the interfacial pressure to the interface between the receiving port 220a of the fixed bushing 220 and the fore-end part 240a of the insulation sleeve 240 at a rear-end part of the insulation sleeve 240 having such the outer diameter, a length of an axial direction of the arrester becomes long. In addition, as a method for giving the interfacial pressure to the interface between the receiving port 220a of the fixed bushing 220 and the fore-end part 240a of the insulation sleeve 240, an installation mechanism section of the metal case 260 is utilized. Concretely, a bolt 280 is inserted into a bolt insertion hole 260a which is provided astride the fore-end part from the rear-end part of the metal case 260 and the fore-end part of the aforementioned bolt 280 is screwed in to a screw hole of an embedded metal fitting 290 which is embedded at the rear-end part side of the fixed bushing 220. And, when utilizing a clamping force of the bolt 280, because the length of the axial direction of the bolt insertion hole 260a becomes long, the straightness accuracy of the installation mechanism section (the bolt insertion hole 260a of the metal case 260, bolt 280 and the embedded metal fitting 290, etc.) is required. In the case that the aforementioned straightness accuracy is low, a gap is generated in the above-mentioned interface, and an insulating characteristic of the arrester deteriorates.

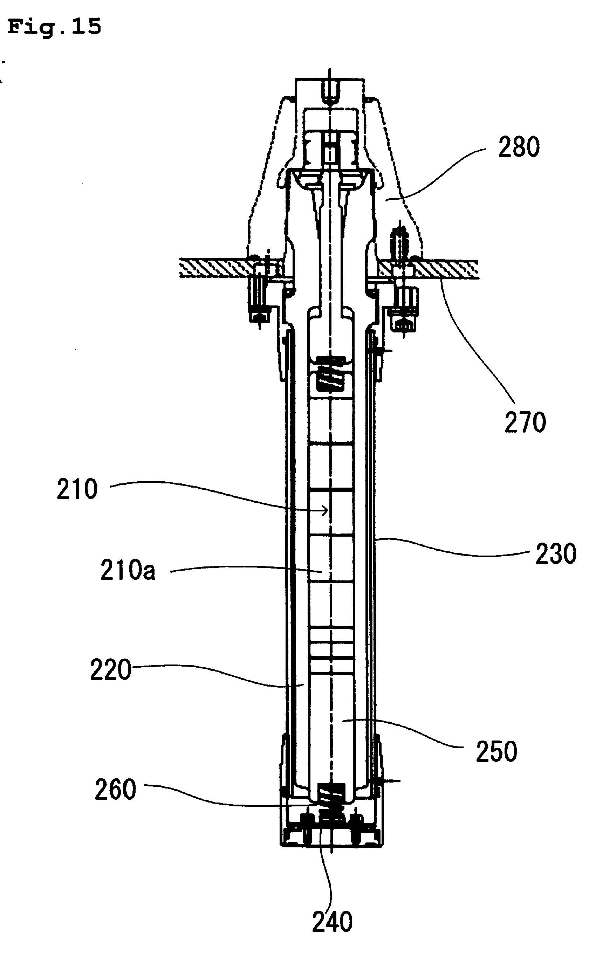

As for the second difficult point, for example, as shown in Fig.15, an arrester that an insulation sleeve 220 housing an arrester elements stack 210 is surrounded by a metal case 230, a lid member 240 of thin thickness is installed in an opening part of this metal case 230, and a spring 260 is arrangedbetween the lid member 240 and an earthed electrode 250 has been originated. In the drawing, numeral 270 shows an equipment case and 280 shows a fixed bushing.

However, in the arrester of such composition, when high current flows to the arrester, because the lid member 240 deforms and a gap is generated between the lid member 240 and an inner periphery of the metal case 230, the pressure in the inside of the insulation sleeve 220 is released and a pressure force of axial direction can be given to the arrester elements stack 210 by the spring force of the spring 260. However, because the lid member 240 is easy to deform, the spring force of the spring 260 which is arranged between a center portion of the lid member 240 and a center portion of the earthed electrode 250 cannot be set greatly. Therefore, the predefined interfacial pressure cannot be given between the arrester elements 210a, and consequently, when such as carrying the arrester, such as the vibration of the arrester element 210a might occur.

On the other hand, as a pressure release structure of the arrester, a method that a pressure relaxation member having a passage for gas between the arrester elements is arranged is known (for example, refer to patent document No.2). However, in such a pressure release structure, because the pressure release structure having the special structure must be arranged between the arrester elements respectively, there are difficult points that the number of parts increases and the cost becomes expensive. In addition, because the predefined interfacial pressure cannot be given between the arrester elements, when such as carrying the arrester, such as the vibration of the arrester element might occur.

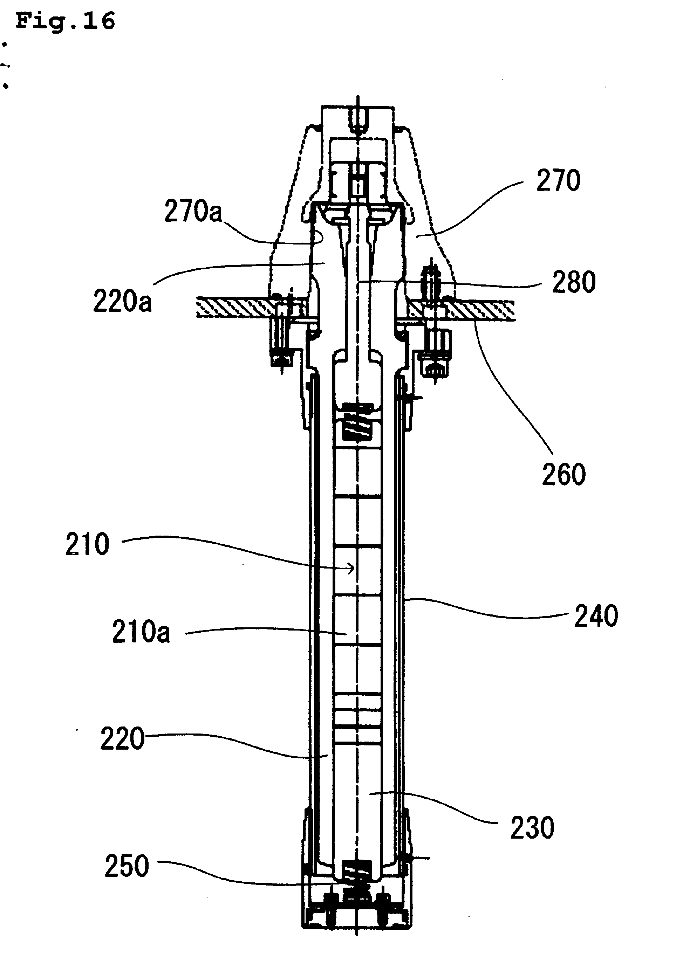

As for the third difficult point, for example, as shown in Fig.16, an insulation sleeve 220 housing an arrester elements stack 210 and an earthed electrode 230 are surrounded by a metal case 240, and a pressure force is given to the arrester elements stack 210 toward the fore-end part direction by the spring force of a spring 250 which is arranged at a rear-end part side of this earthed electrode 230. And an arrester like this has been originated. In the drawing, numeral 260 shows an equipment case and 270 shows a fixed bushing.

However, in the arrester of such composition, although the predefined interfacial pressure can be given to a zinc oxide element 210a which composes the arrester elements stack 210, there was a difficult point that the predefined interfacial pressure cannot be given to the interface between an inner peripheral surface of a receiving port 270a of a fixed bushing 270 and an outer peripheral surface of a fore-end part 220a of an insulation sleeve 220. That is, in the conventional arrester, a conductor 280 which is arranged at the center of the fore-end part 220a of the insulation sleeve 220 is formed in the shape of straight bar, and a direction of the interface between the outer peripheral surface of the abovementioned conductor 280 and the inner peripheral surface of the insulation sleeve 220 becomes parallel to the direction of the pressure force by the spring 250. Therefore, in such a state, when the spring force by the spring 250 is given to the conductor 280, because the aforementioned conductor 280 slides in the inside of the inner peripheral surface of the insulation sleeve 220, there was a difficult point that the spring force by the spring 250 does not work to the fore-endpart of the insulation sleeve 220. Therefore, the redefined interfacial pressure cannot be given to the interface between the inner peripheral surface of the receiving port 270a of the fixed bushing 270 and the outer peripheral surface of the fore-end part 220a of the insulation sleeve 220, and consequently, the dielectric breakdown might occur at the abovementioned interface. In this case, the adhesion of the conductor 280 and the insulation sleeve 220 is attempted by providing an adhesive layer at the outer periphery of the conductor 280. However, because the conductor 280 is formed in the shape of straight bar, there was a difficult point that it was not possible to make the spring force of an axial direction by the spring 250 work effectively as the interfacial pressure.

Patent document No.1: Japanese Patent Publication No.Hei01-232681 (Fig.1)
Patent document No. 2: Japanese Patent Publication No.2005-515626 (Fig.1)

### DISCLOSURE OF THE INVENTION

### PROBLEM TO BE SOLVED BY THE INVENTION

This invention was performed to solve the aforementioned difficult points, and has a purpose to provide the following arrester.

First, the arrester which ensures the interfacial pressure at the interface between the inner peripheral surface of the receiving port of the fixed bushing and the outer peripheral surface of the fore-end part of the insulation sleeve and can perform the miniaturization and the weight saving is provided.

Second, the arrester which can easily discharge the inner pressure of the insulation sleeve which occurs when the high current (the ground-fault current which exceeds the nominal discharge current extremely) flows to the arrester while the predefined interfacial pressure between the arrester elements is given is provided.

Third, the arrester which ensures the interfacial pressure between the inner peripheral surface of the receiving port of the fixed bushing and the outer peripheral surface of the fore-end part of the insulation sleeve and can prevent the dielectric breakdown in the abovementioned interface is provided.

### MEANS FOR SOLVING THE PROBLEMS

The arrester as the first feature of this invention is provided with an insulation sleeve having a conductor at a fore-end part, an arrester elements stack inserted in an inside of the insulation sleeve through a high-voltage electrode and an earthed electrode arranged at a rear-end part side of the arrester elements stack, and an outer diameter of a rear-end part side of the insulation sleeve is smaller than an outer diameter of a center part side of the insulation sleeve.

The arrester as the second feature of this invention is provided with an insulation sleeve having a conductor at a fore-end part, an arrester elements stack inserted in an inside of the insulation sleeve through a high-voltage electrode, an earthed electrode arranged at a rear-end part side of the arrester elements stack, a coil-shaped spring arranged at a rear-end part side of the earthed electrode concentrically to the insulation sleeve, a metal case surrounding the insulation sleeve, the earthed electrode and the spring, and a sealing member installed at an opening part of a rear-end part side of the metal case, and an outer diameter of a rear-end part side of the insulation sleeve is smaller than an outer diameter of a center part side of the insulation sleeve.

The arrester as the third feature of this invention is provided with an insulation sleeve having a conductor at a fore-end part, an arrester elements stack inserted in an inside of the insulation sleeve through a high-voltage electrode, an earthed electrode arranged at a rear-end part side of the arrester elements stack, a coil-shaped spring arranged at a rear-end part side of the earthed electrode concentrically to the insulation sleeve, a metal case surrounding the insulation sleeve, the earthed electrode and the spring, and a sealing member installed at an opening part of a rear-end part side of the metal case, and an outer diameter of a rear-end part side of the insulation sleeve is smaller than an outer diameter of a center part side of the insulation sleeve, and an outer peripheral surface of the insulation sleeve touches an inner peripheral surface of the metal case.

The arrester as the fourth feature of this invention is provided with an insulation sleeve having a conductor at a fore-end part, an arrester elements stack inserted in an inside of the insulation sleeve through a high-voltage electrode, an earthed electrode arranged at a rear-end part side of the arrester elements stack, a coil-shaped spring arranged at a rear-end part side of the earthed electrode concentrically to the insulation sleeve, a metal case surrounding the insulation sleeve, the earthed electrode and the spring, and a sealing member installed at an opening part of a rear-end part side of the metal case, and an outer diameter of a rear-end part side of the insulation sleeve is smaller than an outer diameter of a center part side of the insulation sleeve, and an inclusion for embedding a gap between an inner peripheral surface of the metal case and an outer peripheral surface of the insulation sleeve is provided at an outer circumference of the insulation sleeve.

In the fifth feature of this invention according to any one of the arrester of the first to fourth features, a tapered outer surface whose diameter enlarges gradually toward the direction of a rear-end part of the insulation sleeve is provided at an outer circumference of a fore-end part of the insulation sleeve, and a bell mouth part for easing electric field is provided at a consecutively-installed part of the tapered outer surface and a large diameter part which is provided at an outer circumference of a center part of the insulation sleeve.

In the sixth feature of this invention according to any one of the arrester of the first to fourth features, a funnel-shaped tapered outer surface whose diameter enlarges gradually toward a direction of a fore-end part of the insulation sleeve is provided at a consecutively-installed part of a large diameter part of the insulation sleeve and a rear-end part of the insulation sleeve.

The arrester as the seventh feature of this invention is provided with an insulation sleeve having a conductor at a fore-end part, an arrester elements stack inserted in an inside of the insulation sleeve through a high-voltage electrode, an earthed electrode arranged at a rear-end part side of the arrester elements stack, a coil-shaped spring arranged at a rear-end part side of the earthed electrode concentrically to the insulation sleeve, a metal case surrounding the insulation sleeve, the earthed electrode and the spring, and a sealing member installed at an opening part of a rear-end part side of the metal case, and an outer diameter of a rear-end part side of the insulation sleeve is smaller than an outer diameter of a center part side of the insulation sleeve, a funnel-shaped tapered outer surface whose diameter enlarges gradually toward a direction of a fore-end part of the insulation sleeve is provided at a consecutively-installed part of a large diameter part of the insulation sleeve and a rear-end part of the insulation sleeve, a funnel-shaped tapered inner surface whose diameter enlarges gradually toward a direction of a fore-end part of the metal case is provided at an inner peripheral surface of a consecutively-installed part of a center part of the metal case and a rear-end part of the metal case , and the tapered inner surface of the metal case touches the tapered outer surface of the insulation sleeve.

The arrester as the eighth feature of this invention is provided with an insulation sleeve having a conductor at a fore-end part, an arrester elements stack inserted in an inside of the insulation sleeve through a high-voltage electrode, an earthed electrode arranged at a rear-end part side of the arrester elements stack, a coil-shaped spring arranged at a rear-end part side of the earthed electrode concentrically to the insulation sleeve, a metal case surrounding the insulation sleeve, the earthed electrode and the spring, and a sealing member installed at an opening part of a rear-end part side of the metal case, and an annular locking part which is perpendicular to an axis line and extends toward a center direction is provided at an opening part of a rear-end part side of the metal case, and a rear-end part of the spring touches a surface facing the earthed electrode of the locking part.

The arrester as the ninth feature of this invention is provided with an insulation sleeve having a conductor at a fore-end part, an arrester elements stack inserted in an inside of the insulation sleeve through a high-voltage electrode, an earthed electrode arranged at a rear-end part side of the arrester elements stack, a coil-shaped spring arranged at a rear-end part side of the earthed electrode concentrically to the insulation sleeve, a metal case surrounding the insulation sleeve, the earthed electrode and the spring, and a sealing member installed at an opening part of a rear-end part side of the metal case, and an annular locking part which is perpendicular to an axis line and extends toward a center direction is provided at an opening part of a rear-end part side of the metal case, a rear-end part of the spring touches a surface facing the earthed electrode of the locking part, the sealing member is provided with a lid member which is installed in the air tight at an inner circumference of the locking part and a pressure discharge plate which is arranged at a side facing the earthed electrode of the lid member, and an inner diameter of the spring is larger than an outer diameter of the pressure discharge plate.

The arrester as the tenth feature of this invention is provided with an insulation sleeve having a conductor at a fore-end part, an arrester elements stack inserted in an inside of the insulation sleeve through a high-voltage electrode, an earthed electrode arranged at a rear-end part side of the arrester elements stack, a coil-shaped spring arranged at a rear-end part side of the earthed electrode concentrically to the insulation sleeve, a metal case surrounding the insulation sleeve, the earthed electrode and the spring, and a sealing member installed at an opening part of a rear-end part side of the metal case, and an annular locking part which is perpendicular to an axis line and extends toward a center direction is provided at an opening part of a rear-end part side of the metal case, a rear-end part of the spring touches a surface facing the earthed electrode of the locking part, the sealing member is provided with a lid member which is installed in the air tight at an inner circumference of the locking part and a pressure discharge plate which is arranged at a side facing the earthed electrode of the lid member, an inner diameter of the spring is larger than an outer diameter of the pressure discharge plate, and a slit or a notch is provided at a part of the pressure discharge plate.

In the eleventh feature of this invention according to any one of the arrester of the eighth to tenth features, a columnar boss part is protruded facing a side of the sealing member concentrically to the insulation sleeve at a side facing the sealing member of the earthed electrode, and a fore-end part side of the spring is attached at an outer circumference of the boss part.

In the twelfth feature of this invention according to any one of the arrester of the eighth to tenth features, a conductive member is connected electrically between the earthed electrode and the metal case.

In the thirteenth feature of this invention according to any one of the arrester of the eighth to tenth features, a coil-shaped spring is arranged between a rear-end part of the conductor and a fore-end part of the high-voltage electrode.

The arrester as the fourteenth feature of this invention is provided with an insulation sleeve having a conductor at a fore-end part, an arrester elements stack inserted in an inside of the insulation sleeve through a high-voltage electrode and an earthed electrode arranged at a rear-end part side of the arrester elements stack, and a tapered outer surface whose diameter enlarges gradually toward a direction of a rear-end part of the conductor with predefined tapered angle is provided at a outer circumference of the conductor.

The arrester as the fifteenth feature of this invention is provided with an insulation sleeve having a conductor at a fore-end part, an arrester elements stack inserted in an inside of the insulation sleeve through a high-voltage electrode, an earthed electrode arranged at a rear-end part side of the arrester elements stack, a coil-shaped spring arranged at a rear-end part side of the earthed electrode concentrically to the insulation sleeve, a metal case surrounding the insulation sleeve, the earthed electrode and the spring, and a sealing member installed at an opening part of a rear-end part side of the metal case, and a tapered outer surface whose diameter enlarges gradually toward a direction of a rear-end part of the conductor with predefined tapered angle is provided at a outer circumference of the conductor.

In the sixteenth feature of this invention according to any one of the arrester of the fourteenth or fifteenth features, a tapered outer surface whose diameter enlarges gradually toward a direction of a rear-end part of the insulation sleeve with predefined tapered angle is provided at a outer circumference of a fore-end part of the insulation sleeve.

The arrester as the seventeenth feature of this invention is provided with an insulation sleeve having a conductor at a fore-end part, an arrester elements stack inserted in an inside of the insulation sleeve through a high-voltage electrode, an earthed electrode arranged at a rear-end part side of the arrester elements stack, a coil-shaped spring arranged at a rear-end part side of the earthed electrode concentrically to the insulation sleeve, a metal case surrounding the insulation sleeve, the earthed electrode and the spring, and a sealing member installed at an opening part of a rear-end part side of the metal case, and a tapered outer surface whose diameter enlarges gradually toward a direction of a rear-end part of the conductor with predefined tapered angle is provided at a outer circumference of the conductor, a tapered outer surface whose diameter enlarges gradually toward a direction of a rear-end part of the insulation sleeve with predefined tapered angle is provided at a outer circumference of a fore-end part of the insulation sleeve, and a tapered angle of the conductor is almost equivalent to a tapered angle of the insulation sleeve.

The arrester as the eighteenth feature of this invention is provided with an insulation sleeve having a conductor at a fore-end part, an arrester elements stack inserted in an inside of the insulation sleeve through a high-voltage electrode, an earthed electrode arranged at a rear-end part side of the arrester elements stack, a coil-shaped spring arranged at a rear-end part side of the earthed electrode concentrically to the insulation sleeve, a metal case surrounding the insulation sleeve, the earthed electrode and the spring, and a sealing member installed at an opening part of a rear-end part side of the metal case, and a tapered outer surface whose diameter enlarges gradually toward a direction of a rear-end part of the conductor with predefined tapered angle is provided at a outer circumference of the conductor, and a tapered angle of the conductor is almost equivalent to a tapered angle of a receiving port of a fixed bushing that a fore-end part of the insulation sleeve is installed.

In the nineteenth feature of this invention according to any one of the arrester of the fourteenth, fifteenth, seventeenth or eighteenth features, a receipt hole for housing a spring is provided at least at any one of a side facing the high-voltage electrode of the conductor and a side facing the conductor of the high-voltage electrode.

In the twentieth feature of this invention according to any one of the arrester of the fourteenth, fifteenth, seventeenth or eighteenth features, a plug is installed at an outer circumference of a fore-end part of the conductor.

### EFFECT OF THE INVENTION

According to the arrester from the first feature to the twentieth feature of this invention, there are following effects.

First, by enlarging the outer diameter of the insulation sleeve which corresponds to the high-voltage side of the arrester elements stack that the electric field concentrates, the concentration of the electric field in the high-voltage side of the arrester elements stack can be eased.

Second, by reducing the outer diameter of the insulation sleeve which corresponds to the low-voltage side of the arrester elements stack that the electric field does not concentrate, also the outer diameter of the rear-end part side of the metal case which surrounds the abovementioned insulation sleeve and so on can be reduced, and according to this, the weights of the insulation sleeve and the metal case can be reduced. And also, the working property of assembling of the arrester becomes good and the cost of materials becomes low.

Third, by touching a tapered inner surface of the metal case as the installation mechanism section to a tapered outer surface which is provided at a consecutively-installed part of a large diameter part of the insulation sleeve and a small diameter part of the insulation sleeve, the length of the axial direction of the arrester can be shortened approximately 10% than the length of the hitherto known arrester.

Fourth, by shortening the length of the axial direction of the metal case as the installation mechanism section, the high straightness accuracy is not demanded in the installation mechanism section.

Fifth, when the outer peripheral surface of the insulation sleeve touches the inner peripheral surface of the metal case, or when an inclusion is provided at the outer circumference of the insulation sleeve to infill the gap between the inner peripheral surface of the metal case and the outer peripheral surface of the insulation sleeve, because the difference of diameter of the metal case and the insulation sleeve is lost, the abovementioned insulation sleeve cannot spread even if it is going to spread to the outer direction of the diameter, thereby it is going to spread to also the inner direction of the diameter. Therefore, in the arrester of such composition, the apprehension that the gap between the inner peripheral surface of the insulation sleeve and the outer peripheral surface of the arrester elements stack might occur is lost, and consequently, the arrester which is excellent in partial discharge performance and insulating performance can be provided. Besides, even if the gap between the inner peripheral surface of the insulation sleeve and the outer peripheral surface of the arrester elements stack exists, the abovementioned gap can be crushed, and consequently, the insertion operation of the arrester elements stack into the insulation sleeve which does not need the skilled technique can be attempted.

Sixth, because a rear-end part of a spring is latched together to an annular locking part which is provided at a rear-end part side of the metal case, the spring which has the redefined spring force can be used, and consequently, the predefined interfacial pressure can be added between the arrester elements by the aforementioned spring.

Seventh, because the arrester is composed so that the spring force of the spring does not act on a sealing member which closes the opening part of the rear-end part side of the metal case, the thin and deformable sealing member can be used, and consequently, the pressure of the inside of the insulation sleeve which occurs when the high current flows to the arrester can be discharged easily.

Eighth, because a tapered outer surface whose diameter enlarges gradually toward the direction of the rear-end part of a conductor with the redefined tapered angle is provided at the outer circumference of the conductor, by adding the pressure force to the direction of the fore-end part of the fixed bushing for the conductor, the pressure force of the axial direction for the conductor can be given through the tapered outer surface of the conductor to the direction which is almost perpendicular to a fitted surface (interface) between the inner peripheral surface of the receiving port of the fixed bushing and the tapered outer surface of the fore-end part of the insulation sleeve. And consequently, by making the pressure force of the axial direction operate effectively as the interfacial pressure, the dielectric breakdown in the aforementioned interface can be prevented.

### BRIEF DESCRIPTION OF THE DRAWINGS

[Fig.1] A partial sectional view of the arrester in the first embodiment of this invention.
[Fig.2] A partial sectional view which enlarged the fore-end part side of the arrester shown in Fig.1.
[Fig.3] A partial sectional view which enlarged the rear-end part side of the arrester shown in Fig.1.
[Fig.4] An equipotential distribution drawing of the arrester shown in Fig.1.
[Fig.5] A partial sectional view of the arrester in the second embodiment of this invention.
[Fig. 6] An explanation view which shows the condition that the gap exists between the inner peripheral surface of the metal case and the outer peripheral surface of the insulation sleeve.
[Fig.7] A partial sectional view of the arrester in the third embodiment of this invention.
[Fig.8] A partial sectional view of the arrester in the fourth embodiment of this invention.
[Fig.9] A plan view which shows the other embodiment of a pressure discharge plate in the fifth embodiment of this invention.
[Fig.10] A partial sectional view of the arrester in the sixth embodiment of this invention.
[Fig.11] A partial sectional view of the arrester in the prior art.
[Fig.12] A partial view (a) is an equipotential distribution drawing of the conventional arrester and a partial view (b) is an equipotential distribution drawing which enlarged the high-voltage part of the partial view (a) .
[Fig.13] A partial sectional view of the conventional arrester.
[Fig.14] A partial view (a) is an equipotential distribution drawing of the conventional arrester and a partial view (b) is an equipotential distribution drawing which enlarged the high-voltage part of the partial view (a).
[Fig.15] A partial sectional view of the conventional arrester.
[Fig.16] A partial sectional view of the conventional arrester.

### EXPLANATION OF NUMERALS

- 1: insulation sleeve
11 fore-end part
12 large diameter part
13 tapered outer surface
14 bell mouth part
15 small diameter part
- 2: conductor
22a tapered outer surface
- 3: high-voltage electrode
- 4: arrester elements stack
- 5: earthed electrode
54 boss part
- 6: metal case
63 locking part
64 tapered inner surface
- 7: sealing member
71 lid member
72 pressure discharge plate
- 8: spring
81 conductive member
- 9: fixed bushing
92 receiving port
- C: equipment case
- F: inclusion
- G: gap
- S: high-voltage side spring

### BEST MODE FOR CARRYING OUT THE INVENTION

Hereinafter, the preferred modes of embodiment which applied the arrester of this invention are explained with reference to the drawings. In addition, in the following explanation, "fore-end part" of the insulation sleeve, the conductor, the arrester elements stack, the earthed electrode, the spring, the metal case and the fixed bushing means the end part of the high-voltage side of the insulation sleeve, the conductor, the arrester elements stack, the earthed electrode, the spring, the metal case and the fixed bushing respectively, and these correspond to the left direction in the drawings. Furthermore, "rear-end part" of the insulation sleeve, the conductor, the arrester elements stack, the earthed electrode, the spring, the metal case and the fixed bushing means the end part of the low-voltage side of the insulation sleeve, the conductor, the arrester elements stack, the earthed electrode, the spring, the metal case and the fixed bushing respectively, and these correspond to the right direction in the drawings.

### [Embodiment 1]

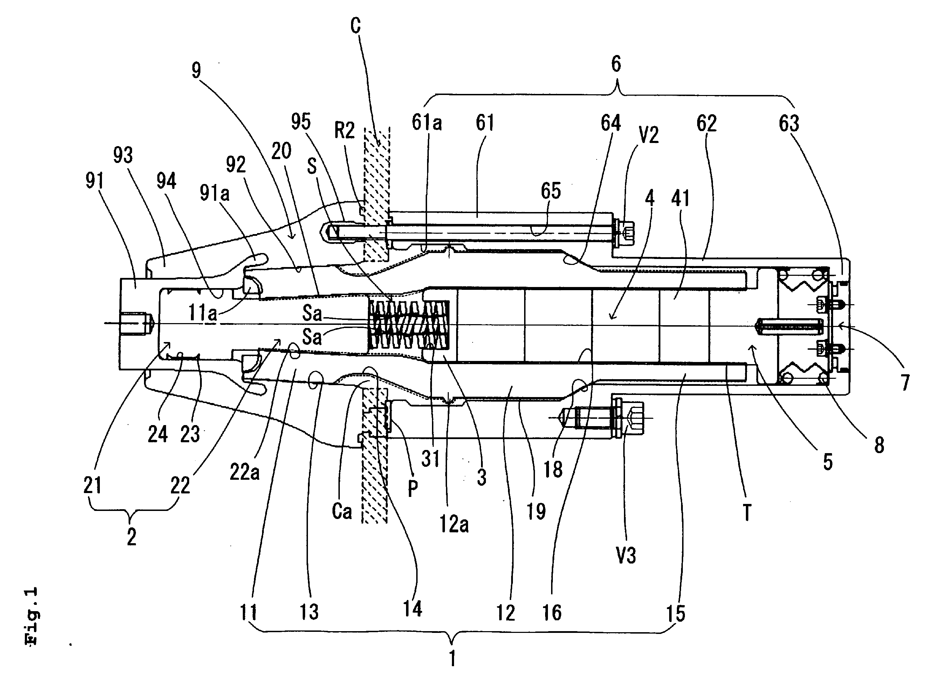

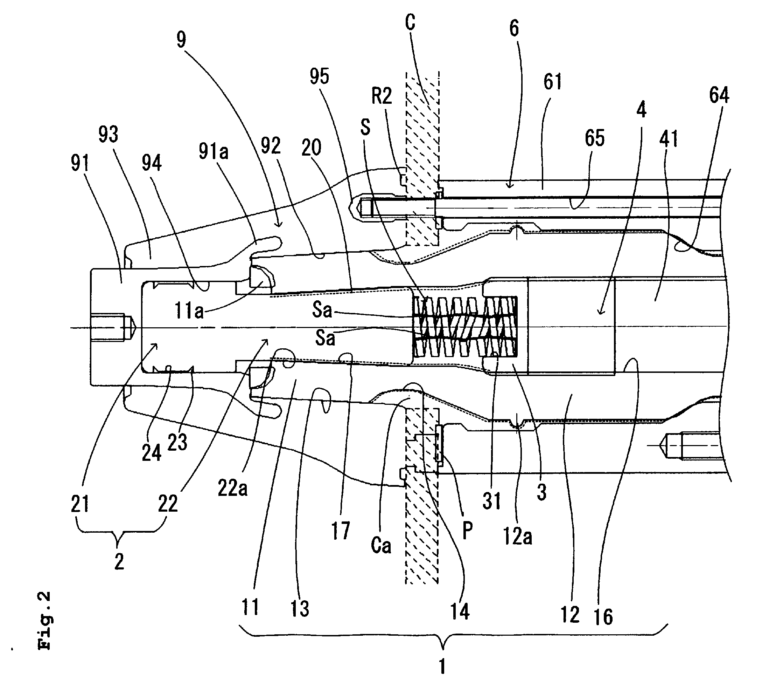

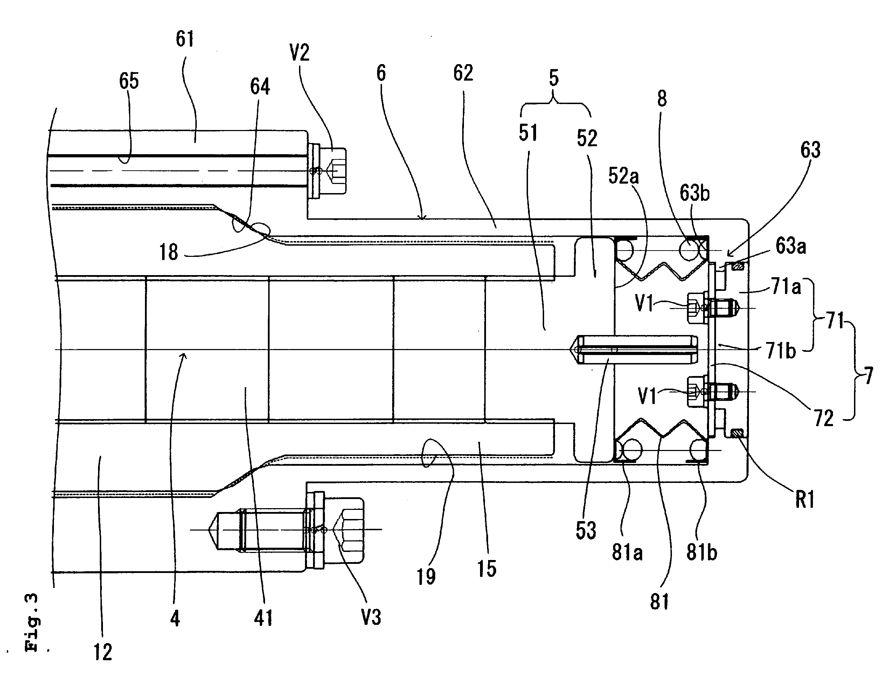

Fig.1 is the partial sectional view which shows one example of the arrester of the 22kV class in the first embodiment of this invention, Fig.2 is the partial sectional view which enlarged the fore-end part of the arrester shown in Fig.1 and Fig.3 is the partial sectional view which enlarged the rear-end part of the arrester shown in Fig.1.

In Fig.1, the arrester of 22kV class in this invention is provided with the insulation sleeve 1 comprising a rubber-like elastic body such as the silicone rubber, and the conductor 2 comprising such as an aluminum bar is arranged at the center of the fore-end part (high-voltage side) 11 of the aforementioned insulation sleeve 1. Besides, the spindle-shaped large diameter part 12 is provided at the outer circumference of the almost center part of the insulation sleeve 1 and the tapered outer surface 13 whose diameter enlarges gradually and smoothly toward the direction of the rear-end part of the insulation sleeve 1 is provided at the outer circumference of the fore-end part of the insulation sleeve 1 with the tapered angle of 2-4 degrees, preferably approximately 3 degrees respectively, and a bell mouth part 14 for easing the electric field is provided at the consecutively-installed part of these tapered outer surface 13 and the large diameter part 12. Furthermore, the funnel-shaped tapered outer surface (hereinafter called "rear-end part side tapered outer surface") 18 whose diameter enlarges gradually toward the direction of the fore-end part of the insulation sleeve 1 is provided at the consecutively-installed part of the large diameter part 12 of the insulation sleeve 1 and the part (hereinafter called "small diameter part") 15 which is the rear-end part side (low-voltage side) than the large diameter part 12, and an insertion part 16 for housing after-mentioned high-voltage electrode 3, arrester elements stack 4 and earthed electrode 5 is provided astride the position corresponding to the large diameter part 12 from the rear-end surface at the small diameter part 15 of the insulation sleeve 1. Besides, the shielding layer 19 by coating of conductive paint etc. is provided astride rear-end of the small diameter part 15 of the insulation sleeve 1 at the outer surface of the bell mouth part 14. Furthermore, the shielding layer 20 for preventing the partial discharge of the internal space by coating of conductive paint etc. is provided astride the position corresponding to an after-mentioned high-voltage electrode 3 at the position contacting to an extracting part 22 of a after-mentioned conductor 2 in the inner peripheral surface of the fore-end part 11 of the insulation sleeve 1.

As shown in Fig.2, the conductor 2 protrudes toward the outer direction from the fore-end part 11 of the insulation sleeve 1, and is provided with a plug-shaped head 21 which is plug-in connected to a conductor insertion hole 94 of an after-mentioned high-voltage shielding body 91 and the rod-shaped extracting part 22 which is provided consecutively at the rear-end part side of this head 21 and installed in the inside of an inserting part 17 of the fore-end part 11 side of the insulation sleeve 1. Besides, an annular concave groove 23 is provided at the outer circumference of the head 21, and in the aforementioned concave groove 23, a tape-shaped electrical contact (multicontact) 24 is attached along the circumferential direction of the concave groove 23. Furthermore, a tapered outer surface 22a whose diameter enlargers gradually and smoothly toward the direction of the rear-end part of the extracting part 22 is provided at the outer circumference part of the extracting part 22 with the tapered angle of 2-4 degrees, preferably approximately 3 degrees. Here, the tapered angle of the extracting part 22 in the conductor 2 is almost equivalent to the tapered angle of the fore-end part 11 in the insulation sleeve 1 and the tapered angle of a receiving port 92 in an after-mentioned fixed bushing 9.

The arrester elements stack 4 comprises by stacking multiple disk-shaped nonlinear resistive elements (hereinafter called "arrester elements") 41 whose main component is zinc oxide, and the columnar high-voltage electrode 3 and the earthed electrode 5 which comprise such as aluminum respectively are arranged at the fore-end part side (high-voltage side) and the rear-end part side (low-voltage side) of the arrester elements stack 4.

The high-voltage electrode 3 has the almost equivalent outer diameter as the outer diameter of the arrester element 41, and a receipt hole 31 for housing an after-mentioned coil-shaped spring (hereinafter called "high-voltage side spring") S is provided at the side facing the rear-end part of the extracting part 22 of the conductor 2 concentrically to the high-voltage electrode 3.

As shown in Fig. 3, the earthed electrode 5 is provided with a small diameter earthed electrode 51 which has the almost equivalent outer diameter as the outer diameter of the arrester element 41 and a larger diameter earthed electrode 52 which is provided consecutively at the rear-end part side of the aforementioned small diameter earthed electrode 51 and has the almost equivalent outer diameter as the inner diameter of an after-mentioned small diameter cylindrical part 62 of the metal case 6, and a rigid body 53 which comprises such as aluminum rod which extends toward the opening part of the metal case 6 is protruded at the center of the rear-end part of the aforementioned large diameter earthed electrode 52 concentrically to the earthed electrode 5.

Numeral 6 shows the cylindrical metal case which is the part except the fore-end part of the insulation sleeve 1 and surrounds the earthed electrode 5 and an after-mentioned spring 8. And aforementioned metal case 6 is provided with a large diameter cylindrical part 61 which surrounds the large diameter part 12 of the insulation sleeve 1 and the small diameter cylindrical part 62 which surrounds the small diameter part 15, the earthed electrode 5 and the spring 8 of the insulation sleeve 1, and an annular locking part 63 which is perpendicular to the axis line of the metal case 6 and extends toward the center direction of the metal case 6 is provided at the opening part of the rear-end part side of the small diameter cylindrical part 62. Besides, an annular projection part 63a which is perpendicular to the axis line of the metal case 6 and extends toward the center direction of the metal case 6 is provided at the inner circumference of the locking part 63. Furthermore, a funnel-shaped tapered inner surface 64 whose diameter enlarges gradually and smoothly toward the fore-end part is provided at the inner peripheral surface of the consecutively-installed part of the small diameter cylindrical part 62 and the large diameter cylindrical part 61, and a bolt insertion hole 65 is provided astride the fore-end surface from the rear-end surface of the large diameter cylindrical part 61 at the large diameter cylindrical part 61. In addition, for example, three bolt insertion holes 65 are provided along the circumferential direction of the large diameter cylindrical part 61 with equidistance placement.

The sealing member 7 is provided with a circular lid member 71 which is installed in the air tight at the inner circumference of the locking part 63 through an O-ring R1 and a circular pressure discharge plate 72 which is arranged at the fore-end part side than the projection part 63a in the inner circumference of the locking part 63, and these lidmember 71 and pressure discharge plate 72 are formed by such as aluminum circular plate. Here, the lid member 71 is provided with a large diameter lid member 71a which has the almost equivalent outer diameter as the inner diameter of the locking part 63 and a small diameter lid member 71b which is consecutively installed at the side facing the earthed electrode 5 of the large diameter lid member 71a and has the small outer diameter than the inner diameter of the projection part 63a, and two screw holes are provided in the spaced state astride a part of the large diameter lid member 71a from the end face side of the small diameter lid member 71b at the small diameter lid member 71b. Besides, the outer diameter of the pressure discharge plate 72 is almost equivalent to the inner diameter of the locking part 63, and through-holes are provided at the part corresponding to the screw holes of the small diameter lid member 71b respectively. In addition, for example, the thickness of the pressure discharge plate 72 is almost 2mm.

Numeral 8 shows the coil-shaped spring comprising such as stainless steel, and the aforementioned spring 8 is arranged concentrically to the insulation sleeve 1 between the surface (hereinafter called "locking surface of the earthed electrode") 52a facing the locking part 63 of a large diameter earthed electrode 52 and the surface (hereinafter called "locking surface of the metal case") 63b facing the locking surface 52a of the earthed electrode as the locking part 63. Besides, two conductive members 81, 81 comprising such as copper plate for connecting electrically between the earthed electrode 5 and the metal case 6 are arranged in the distant state at the inner side of the spring 8, and it is composed so that high current flows through these conductive members 81, 81. In addition, the both end parts of these conductive members 81 touch the inner peripheral surface of the small diameter cylindrical part 62 of the metal case 6 by folding the both end parts of conductive members 81 outside the spring 8 respectively.

Here, the outer diameter of the spring 8 is almost equivalent to the outer diameter of the large diameter earthed electrode 52 or slightly smaller than this, and the inner diameter of the spring 8 is almost equivalent to the inner diameter of the locking part 63 or slightly larger than this, besides, the outer diameter of the pressure discharge plate 72 is smaller than the inner diameter of the spring 8 and slightly larger than the inner diameter of the projection part 63a.

According to the locking part 63 of the metal case 6, the pressure discharge plate 72 and the spring 8 of such compositions, the rear-end part side of the spring 8 touches only the locking surface 63b of the metal case 6, and the spring force of the spring 8 does not act on the pressure discharge plate 72.

In addition, in Fig.3 from Fig.1, numerals V2, V3 show the bolts, numeral 12a shows the annular projection for preventing the departure of the metal case 6, numeral 61a shows the annular concave groove which is provided at the inner circumference of the fore-end part side of the large diameter cylindrical part 61 of the metal case 6, numeral 11a shows the annular stopper which is embedded in the fore-end part 11 of the insulation sleeve 1, numeral Sa shows the conductive member comprising such as copper plate for connecting electrically between the conductor 2 and the high-voltage electrode 3.

Next, the assembling method of the arrester of this invention is explained.

In Fig.1, first, the fixed bushing 9 comprising such as molded body of the epoxy resin discussed below is installed in the air tight at the inner wall of the equipment case C which houses the electric equipment (not shown in drawing).

The cylindrical high-voltage shielding body 91 whose one end is closed is embedded concentrically to the fixed bushing 9 at the center of the fore-end part side (high-voltage side) of the fixed bushing 9, and the receiving port 92 which has the tapered inner surface whose diameter becomes small gradually toward the direction of the fore-end part of the fixed bushing is provided at the rear-end part side (low-voltage side) of the fixed bushing 9 with the tapered angle of 2-4 degrees, preferably approximately 3 degrees.

The fore-end part side of the high-voltage shielding body 91 protrudes to the outer direction than the closing part (fore-end part) 93 of the fixed bushing 9, and the circular conductor insertion hole 94 for receiving the conductor 2 of the arrester is provided at the rear-end part side.

In addition, in the drawing, numeral 91a shows the shield which is provided so that it covers the circumference of the neighborhood of the fore-end part of the receiving port 92, and numeral 95 shows the embedded metal fitting having the screw hole which is embedded at the rear-end part of the fixed bushing 9.

In the fixed bushing 9 of such composition, the rear-end part touches the inner wall side of the equipment case C through the O-ring R2 and is tightened by the bolt which is not shown in drawing. Therefore, the fixed bushing 9 is installed in the air tight at the inner wall side of the equipment case C. In addition, for example, in the inside of the equipment case C, the insulating gas such as SF₆ gas is filled.

Meanwhile, the arrester is assembled and fixed as follows.

First, the pressure discharge plate 72 is arranged from the inside of the small diameter cylindrical part 62 at the inner circumference of the locking part 63 which constructs the metal case 6, and the lid member 71 that the O-ring R1 is arranged is arranged from the outside of the small diameter cylindrical part 62, and both are tightened and fixed by the bolts V1, V1. Besides, immediately after this, the high-voltage electrode 3, the arrester elements stack 4 and the earthed electrode 5 are arranged as shown in drawings, and these high-voltage electrode 3, arrester elements stack 4 and earthed electrode 5 are integrated by winding the tape T (for example, kapton adhesive tape) which is excellent in insulating performance and heat resistance. In this way, in integrated high-voltage electrode 3, arrester elements stack 4 and earthed electrode 5, after the high-voltage side spring S is housed in the receipt hole 31 of the high-voltage electrode 3, the high-voltage electrode 3 is inserted in the insertion part 16 of the insulation sleeve 1 toward the side of the conductor 2. In this case, it is preferable that both end parts of two conducting members Sa which are inserted in the inside of the high-voltage side spring S are folded outside the high-voltage side spring S.

Next, after the insulation sleeve 1 which installs the spring 8 and integrated high-voltage electrode 3, arrester elements stack 4 and earthed electrode 5 is inserted into the inside of the metal case 6, the fore-end part side of the metal case 6 touches the outer wall of the equipment case C through an annular packing P, and furthermore, the fore-end part of the bolt V2 which is inserted in the bolt insertion hole 65 is screwed in the screw hole of the embedded metal fitting 95 of the fixed bushing 9. According to this, in the state that the bell mouth part 14 of the arrester is positioned in the inside of a through-hole Ca of the equipment case C, the metal case 6 is installed in the air tight at the outer wall of the equipment case C, and the tapered inner surface 64 of the metal case 6 touches the rear-end part side tapered outer surface 18 of the insulation sleeve 1, and the pressure force is given to the direction of the fore-end part of the insulation sleeve 1 through the aforementioned touching part. And herewith, the fore-end part (the fore-end part 11 of the insulation sleeve 1) of the arrester is pushed to the receiving port 92 of the fixed bushing 9, and the head 21 of the conductor 2 is connected by plug-in system to the conductor insertion hole 94 of the fixed bushing 9, and consequently, an individual piece (not shown in drawing) which constructs the electrical contact (multicontact) 24 which is arranged at the head 21 contacts the inner peripheral surface of the conductor insertion hole 94 electrically.

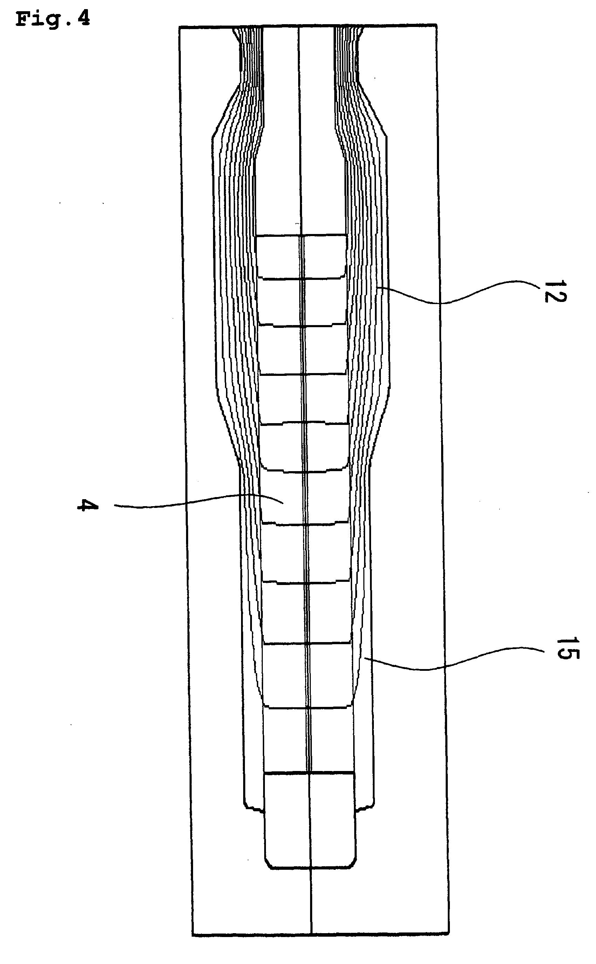

Fig. 4 shows the equipotential distribution drawing in the arrester of this invention.

From this drawing, by enlarging the outer diameter of the insulation sleeve 1 corresponding to the high-voltage side of the arrester elements stack 4, it is understood that the electric field in the large diameter part 12 of the aforementioned insulation sleeve 1 is eased.

As described above, according to the arrester of this invention, there are following effects.

First, by enlarging the outer diameter of the insulation sleeve 1 corresponding to the high-voltage side of the arrester elements stack 4 that the electric field concentrates, the concentration of the electric field in the high-voltage side of the arrester elements stack 4 can be eased.

Second, by reducing the outer diameter of the insulation sleeve 1 corresponding to the low-voltage side of the arrester elements stack 4 that the electric field does not concentrate, the outer diameter of the rear-end part side of the metal case 6 which surrounds the aforementioned insulation sleeve 1 and so on can be also reduced. In response to this, the weight of the insulation sleeve 1 and the metal case 6 can be reduced, and the working property of assembling of the arrester also becomes good, and the cost of material also becomes relatively cheap.

Third, by touching the tapered inner surface 64 of the metal case 6 as the installation mechanism section to the tapered outer surface 18 which is provided at the consecutively-installed part of the large diameter part 12 of the insulation sleeve 1 and the small diameter part 15 of the insulation sleeve 1, the length of the axial direction of the arrester can be shortened approximately 10% than the length of the conventional arrester.

Fourth, by shortening the length of the axial direction of the metal case 6 as the installation mechanism section, the high straightness accuracy in the installation mechanism section is not requested.

Fifth, the metal case 6 is installed to the outer wall of the equipment case C by the bolt V2. Therefore, the spring 8 is compressed between the locking surface 52a of the earthed electrode 5 and the locking surface 63b of the metal case 6, and the high-voltage side spring S is compressed between the extracting part 22 of the conductor and the high-voltage electrode 3, and thereby the spring force of the axial direction is given to the spring 8 and the high-voltage side spring S. Thereby, the earthed electrode 5, the arrester elements stack 4 and the high-voltage electrode 3 are pressed toward the side of the receiving port 92 of the fixed bushing 9, and the pressure force of the axial direction for the earthed electrode 5, the arrester elements stack 4 and the high-voltage electrode 3 is given to the direction which is almost perpendicular to the fitted surface (interface) between the inner peripheral surface of the receiving port 92 of the fixed bushing 9 and the tapered outer surface 13 of the fore-end part 11 of the insulation sleeve 1 through the tapered outer surface 22a in the extracting part 22 of the conductor 2. And consequently, by making the pressure force of the axial direction operate effectively as the interfacial pressure, the dielectric breakdown in the aforementioned interface can be prevented.

Sixth, by the synergetic effect of the spring force of the spring 8 and the high-voltage side spring S, the predefined interfacial pressure is given between the high-voltage electrode 3 and the arrester element 41, between the arrester elements 41, and between the arrester element 41 and the earthed electrode 5. And consequently, the prevention of the vibration of the arrester elements 41 during transportation of the arrester can be attempted.

Seventh, by providing the weak point for discharging pressure in a part of the sealing member 7 which closes the opening part of the rear-end part side of the metal case 6, specifically, by arranging the pressure discharge plate 72 which has thin thickness and is easy to deform at the inner circumference of the locking part 63, when high current flows and the arrester element 41 destroys, the earthed electrode 5 is pushed to the rear-end part side (opening part side) of the metal case 6 by pressure increase in the inside of the insulation sleeve 1. And consequently, the rod 53 is pushed to the opening part side, and the pressure discharge plate 72 is bent, and the lid member 71 jumps out of the opening part. Thereby, the pressure in the inside of the insulation sleeve 1 is discharged to the outside. Therefore, according to the arrester of this invention, because the sealing by the sealing member 7 is released by low pressure than the pressure of destruction of the insulation sleeve 1, the scattering of the arrester element 41 or the bushing 9 can be prevented.

### Embodiment 2

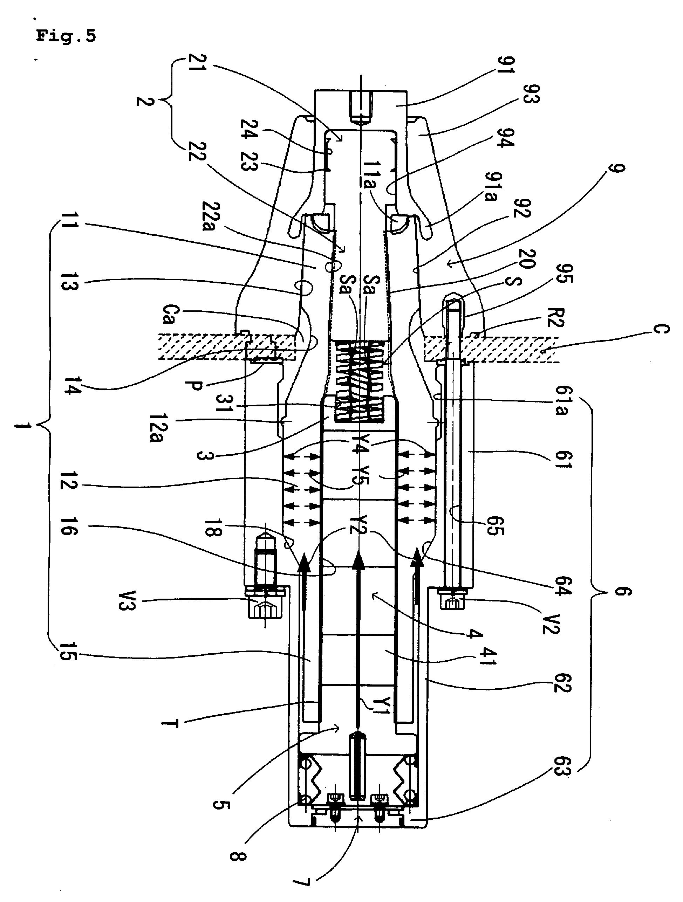

Fig.5 is a partial sectional view which shows an example of the arrester of 22kV class in the second embodiment of this invention. In addition, in this drawing, the same numeral is given to the part which is same as Fig.1 and the detailed explanation is omitted. Besides, in Fig.5, to facilitate understanding, the illustration of the shielding layer 19 on the insulation sleeve 1 which is shown in Fig.1 is omitted.

In this embodiment, as shown in Fig.5, by touching the outer peripheral surface of the insulation sleeve 1, particularly the outer peripheral surface of the large diameter part 12 of the insulation sleeve 1 which has high electric field to the inner peripheral surface of the corresponding position of the metal case 6, it is constructed so that the difference of diameter between the inner peripheral surface of the metal case 6 and the outer peripheral surface of the insulation sleeve 1 does not occur.

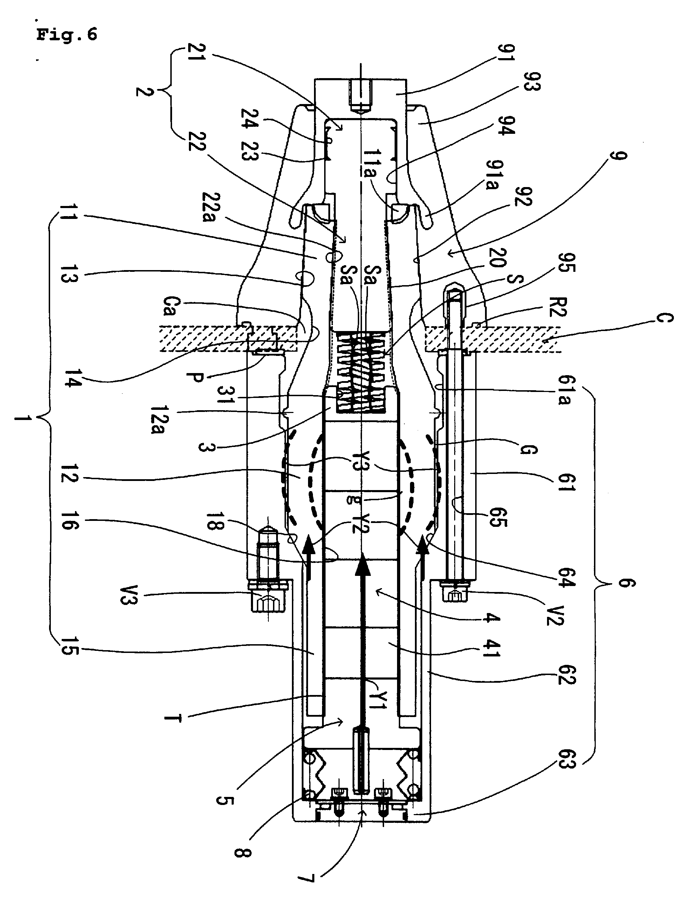

Here, in the case that the difference of diameter between the inner diameter of the metal case 6 and the outer diameter of the insulation sleeve 1 exists, that is, as shown in Fig.6, the problems in the case that the gap G exists between the inner peripheral surface of the metal case 6 and the outer peripheral surface of the insulation sleeve 1 are explained.

First, as for the plug-in arrester of the composition that the arrester elements stack 4 is inserted to the insulation sleeve 1, in the case that the outer peripheral surface of the arrester elements stack 4 is inserted without sticking to the inner peripheral surface of the insulation sleeve 1, that is, in the case that the gap G exists between the inner peripheral surface of the insulation sleeve 1 and the outer peripheral surface of the arrester elements stack 4, the partial discharge occurs by the aforementioned gap G, and the predefined characteristic might not be obtained. Besides, as for the plug-in arrester of such composition, for ensuring the interfacial pressure in the interface between the inner peripheral surface of the receiving port 92 of the fixed bushing 9 and the outer peripheral surface of the fore-end part 11 of the insulation sleeve 1, as shown by arrows Y1, Y2, it is necessary to press the insulation sleeve 1 toward the fixed bushing 9.

However, for example, in the case that the gap G of several mm exists between the inner peripheral surface of the metal case 6 and the outer peripheral surface of the insulation sleeve 1, because the fore-end part 11 of the insulation sleeve 1 is pressed to the fixed bushing 9, when the insulation sleeve 1 is pressed toward the fixed bushing 9, as shown by dotted line Y3, the insulation sleeve 1 deforms and expands to the outer direction of the diameter at the part of the aforementioned gap G. Therefore, the gap G might occur between the outer peripheral surface of the arrester elements stack 4 and the inner peripheral surface of the insulation sleeve 1 by the aforementioned deformation.

Consequently, in this embodiment, as shown in Fig.5, by touching the outer peripheral surface of the insulation sleeve 1, particularly the outer peripheral surface of the large diameter part 12 of the insulation sleeve 1 which has high electric field to the inner peripheral surface of the corresponding position of the metal case 6, that is, by not making the difference of the diameter occur between the inner peripheral surface of the metal case 6 and the outer peripheral surface of the insulation sleeve 1, it is constructed so that the gap G does not occur between the inner peripheral surface of the metal case 6 and the outer peripheral surface of the insulation sleeve 1.

In the arrester of such composition, as shown by arrows Y1, Y2, when the insulation sleeve 1 is pressed toward the fixed bushing 9, as shown by arrow Y4, because the gap does not exist at the position that the insulation sleeve 1 tends to spread to the outer direction of the diameter, the aforementioned insulation sleeve does not spread to the outer direction of the diameter, and as shown by arrow Y5, it tends to also spread to the inner direction of the diameter. Therefore, in this embodiment, the gap G might not occur between the inner peripheral surface of the insulation sleeve 1 and the outer peripheral surface of the arrester elements stack 4, and consequently, the arrester which is excellent in the partial discharge performance and the insulating performance can be provided. Besides, even if the gap G exists between the inner peripheral surface of the insulation sleeve 1 and the outer peripheral surface of the arrester elements stack 4, the aforementioned gap g can be crushed, and consequently, the insertion operation of the arrester elements stack 4 to the insulation sleeve 1 which does not need the skilled technique can be attempted. In addition, in the outer diameter of the insulation sleeve 1, particularly, by slightly enlarging the outer diameter of the large diameter part 12 which has high electric field than the inner diameter of the metal case 6, the outer peripheral surface of the insulation sleeve 1 may contact closely to the inner peripheral surface of the metal case 6. Besides, in the side of the small diameter part 15 of the insulation sleeve 1, because the electric field is low, the gap may exist between the inner peripheral surface of the metal case 6 and the outer peripheral surface of the insulation sleeve 1.

### Embodiment 3

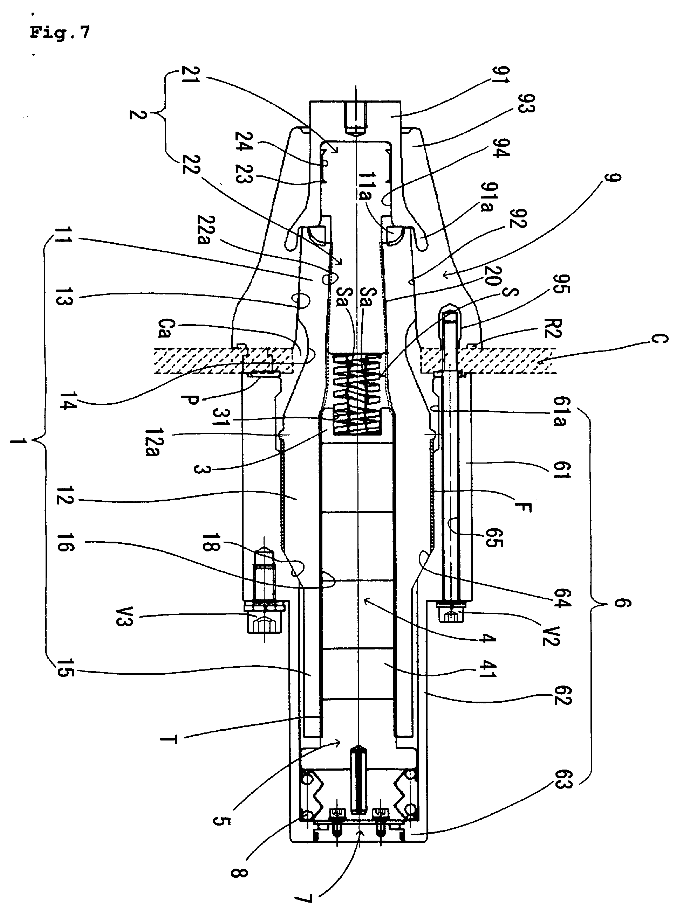

Fig.7 is a partial sectional view which shows an example of the arrester of 22kV class in the third embodiment of this invention. In addition, in this drawing, the same numeral is given to the part which is same as Fig.1 and the detailed explanation is omitted. Besides, in Fig.7, to facilitate understanding, the illustration of the shielding layer 19 on the insulation sleeve 1 which is shown in Fig.1 is omitted.

In this embodiment, as shown in Fig.7, in the outer circumference of the insulation sleeve 1, particularly, in the outer circumference of the large diameter part 12 of the insulation sleeve 1 that the insulation sleeve 1 has high electric field, the inclusion F for embedding the gap G (refer to Fig. 6) between the inner peripheral surface of the corresponding position of the metal case 6 and the outer peripheral surface of the large diameter part 12 of the insulation sleeve 1 is provided.

As the inclusion F like this, the longitudinally placed layer of the rubber tape comprising such as butyl rubber which is placed longitudinally along the longer direction at the outer peripheral surface of the insulation sleeve 1, the winding layer of the rubber tape comprising such as butyl rubber which is winded by wrapping on the outer peripheral surface of the insulation sleeve 1 or the cylindrical metal fitting comprising such as aluminum metal fitting which is inserted between the inner peripheral surface of the metal case 6 and the outer peripheral surface of the insulation sleeve 1 can be quoted.

Also in this embodiment, because there is no difference of the diameter of the metal case 6 and the insulation sleeve 1, as well as the second embodiment, even if the insulation sleeve 1 is pressed toward the fixed bushing 9, the gap G might not occur between the inner peripheral surface of the insulation sleeve 1 and the outer peripheral surface of the arrester elements stack 4, and consequently, the arrester which is excellent in the partial discharge performance and the insulating perfomance can be provided. Besides, as well as the second embodiment, even if the gap G exists between the inner peripheral surface of the insulation sleeve 1 and the outer peripheral surface of the arrester elements stack 4, the aforementioned gap G can be crushed, and consequently, the insertion operation of the arrester elements stack 4 to the insulation sleeve 1 which does not need the skilled technique can be attempted.

### Embodiment 4

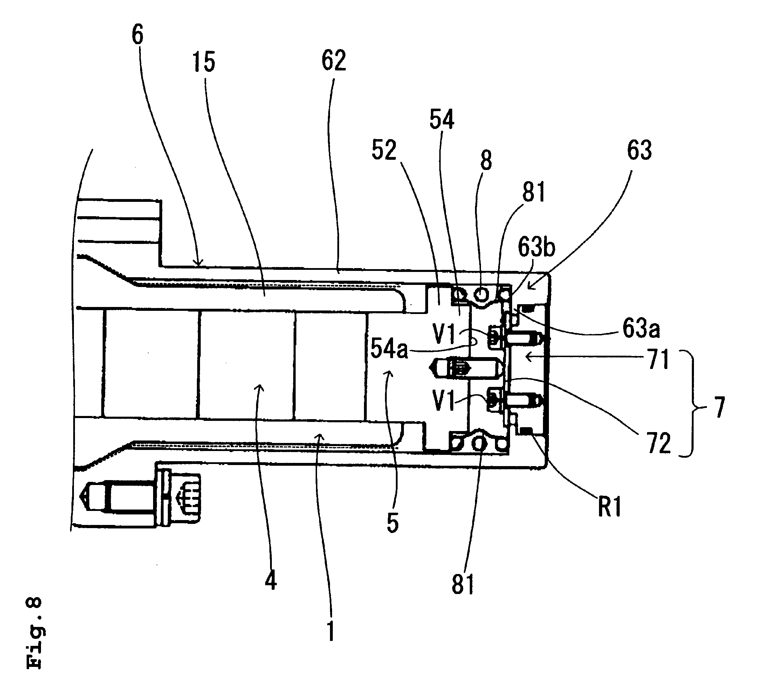

Fig.8 is a partial sectional view which shows other embodiment of the arrester of this invention. In addition, in this drawing, the same numeral is given to the part which is common to Fig.1 and Fig.3, and the detailed explanation is omitted.

As for Fig.8, in this embodiment, a columnar boss part 54 is protruded facing the side of the sealing member 7 concentrically to the insulation sleeve 1 at the side facing the sealing member 7 of the large diameter earthed electrode 52. And the fore-end part side of the spring 8 is attached at the outer circumference of the protruded boss part 54.

In this embodiment, because the fore-end part of the spring 8 is attached at the outer circumference of the boss part 54, the spring 8 can be arranged in more stable condition than the first embodiment.

Besides, in this embodiment, the projection part 63a which is shown in Fig.1 is formed so that it becomes same surface as the locking surface 63b of the metal case 6, and the outer edge of the pressure discharge plate 72 touches the locking surface 63b of this metal case 6. Also in such a composition, the rear-end part side of the spring 8 can be touched to only the locking surface 63b of the metal case 6, and consequently, it is possible not to make the spring force of the spring 8 act on the pressure discharge plate 72.

### Embodiment 5

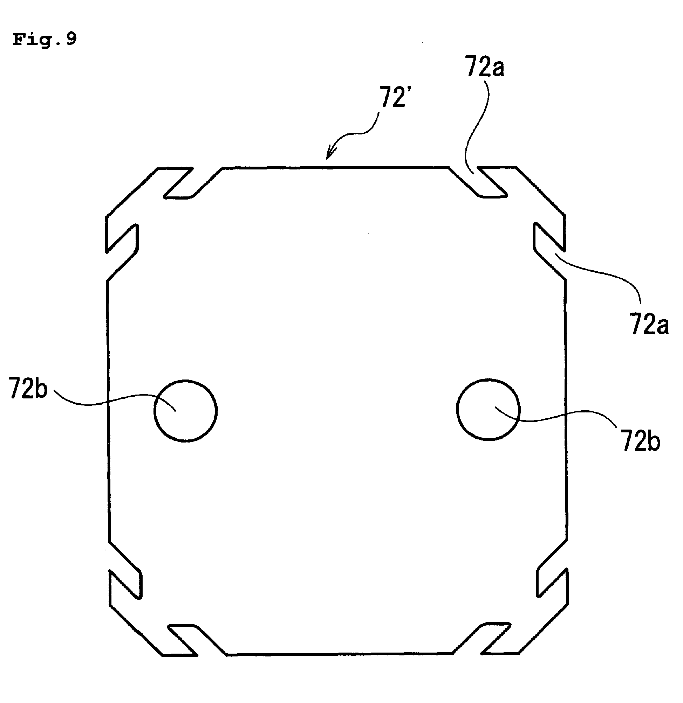

Fig.9 is a plan view which shows the other embodiment of the pressure discharge plate in the arrester of this invention. In addition, in this drawing, the same numeral is given to the part which is common to Fig.1 and Fig.3, and the detailed explanation is omitted.

In Fig.9, the pressure discharge plate in this embodiment is provided with a plate member 72' which has the rectangular shape as a whole, and the slits 72a are provided at the corners of the aforementioned plate member 72' respectively. And, the through-holes 72b are provided at the part corresponding to the screw holes of the small diameter lid member 71b (refer to Fig.3) of the plate member 72' respectively.

Also in this embodiment, the corners of the plate member 72' can be latched together on the locking surface 63b (refer to Fig.8) of the metal case, and because the slits 72a are provided at the plate member 72', it is possible to deform the plate member 72' by further lower pressure than the first embodiment.

### Embodiment 6

Fin.10 is a partial sectional view which shows other embodiment of the arrester of this invention. In addition, in this drawing, the same numeral is given to the part which is common to Fig.3 from Fig.1, and the detailed explanation is omitted.

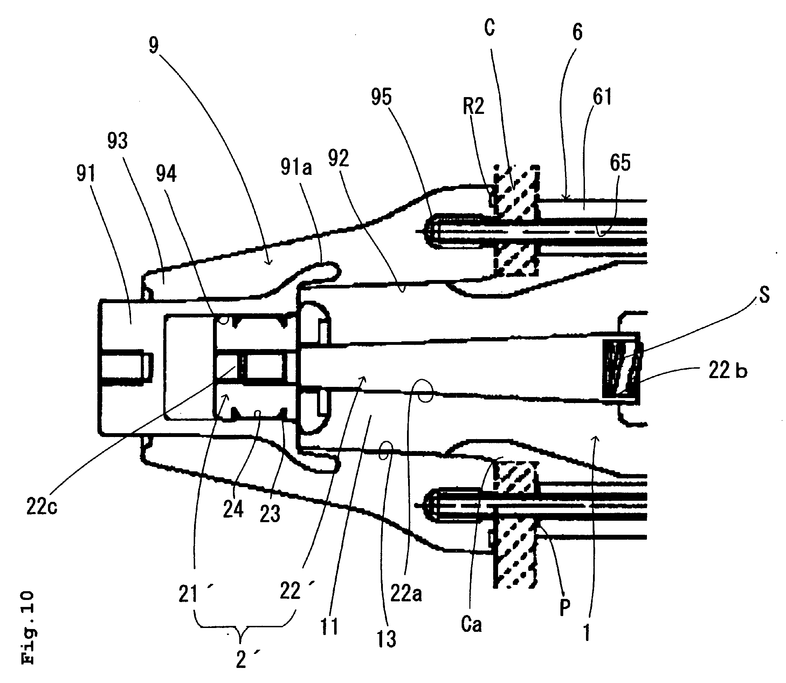

As for Fig.10, in this embodiment, instead of the conductor 2 which is shown in Fig.1, a conductor 2' which has a receipt hole 22b for housing the high-voltage side spring S at the side facing the high-voltage electrode 3 of an extracting part 22' is used. In addition, the receipt hole 22b is provided concentrically to the conductor 2'.

In this embodiment, the fore-end part of the high-voltage side spring S is fitted into the receipt hole 22b. Therefore, as well as the first embodiment, the high-voltage side spring S can be arranged in stable condition.

Besides, in this embodiment, a rod-shaped extending part 22c protrudes from the fore-end part of the extracting part 22', and a plug 21' which is a body different from the protrusive extending part 22c is attached.

Also in this embodiment, as well as the first embodiment, the plug 21' as the conductor 2' can be connected by plug-in system to the conductor insertion hole 94 of the fixed bushing 9.

### INDUSTRIAL APPLICABILITY

In this invention, it is possible to modify or revise the invention within the scope of claims as follows.

First, in the fifth embodiment from the first embodiment as described above, although the case that the tapered outer surface 22a is provided at the outer circumference part of the conductor 2 is explained, also it is possible that the conductor is the straight rod-shape not having the tapered outer surface.

Second, in the sixth embodiment from the first embodiment as described above, although the case that the receipt hole for housing the spring is provided at any one of the side facing the high-voltage electrode of the conductor and the side facing the conductor of the high-voltage electrode is explained, also it is possible to provide the receipt hole for housing the spring at both of the side facing the high-voltage electrode of the conductor and the side facing the conductor of the high-voltage electrode.

Third, in the second embodiment, the third embodiment and the sixth embodiment as described above, although the case that the annular locking part 63 or the annular projection part 63a is provided at the opening part of the rear-end part side of the small diameter cylindrical part 62 which composes the metal case 6 is explained, also it is possible that these locking part 63 or projection part 63a are not provided at the opening part of the rear-end part side of the small diameter cylindrical part 62.

Fourth, in the third embodiment as described above, although the case that the longitudinally placed layer or the winding layer of the rubber tape as the inclusion F is provided at the gap G between the inner peripheral surface of the metal case 6 and the outer peripheral surface of the large diameter part 12 of the insulation sleeve 1 is explained, also it is possible to provide the longitudinally placed layer or the winding layer of the plastic resin tape. Besides, also it is possible to insert the cylindrical member comprising the hard plastic resin instead of the cylindrical metal fitting comprising such as aluminum metal fitting which is inserted between the inner peripheral surface of the metal case 6 and the outer peripheral surface of the insulation sleeve 1. Furthermore, also it is possible to embed the gap G by attaching the rubber sheet to the inner peripheral surface of the metal case 6, and the method for embedding the gap G is not limited. In addition, the method for embedding the gap G is not limited also in the second embodiment as described above.

Fifth, in the sixth embodiment from the fourth embodiment as described above, although the insulation sleeve 1 which has the large diameter part is explained, also it is possible to use the insulation sleeve not having the large diameter part.

Sixth, in the sixth embodiment from the first embodiment as described above, although the case that the high-voltage side spring S is arranged between the conductor 2 and the high-voltage electrode 3 is explained, also it is possible not to arrange the high-voltage side spring S between the conductor 2 and the high-voltage electrode 3.

Seventh, in the fifth embodiment as described above, although the case that the slit 72a is provided at the plate member 72' is explained, also it is possible to provide the notch instead of the slit 72a.

## Claims

1. An arrester, **characterized by** comprising:
an insulation sleeve having a conductor at a fore-end part,
an arrester elements stack inserted in an inside of said insulation sleeve through a high-voltage electrode, and
an earthed electrode arranged at a rear-end part side of said arrester elements stack,
wherein an outer diameter of a rear-end part side of said insulation sleeve is smaller than an outer diameter of a center part side of said insulation sleeve.

2. An arrester, **characterized by** comprising:
an insulation sleeve having a conductor at a fore-end part,
an arrester elements stack inserted in an inside of said insulation sleeve through a high-voltage electrode,
an earthed electrode arranged at a rear-end part side of said arrester elements stack,
a coil-shaped spring arranged at a rear-end part side of said earthed electrode concentrically to said insulation sleeve,
a metal case surrounding said insulation sleeve, said earthed electrode and said spring, and
a sealing member installed at an opening part of a rear-end part side of said metal case,
wherein an outer diameter of a rear-end part side of said insulation sleeve is smaller than an outer diameter of a center part side of said insulation sleeve.

3. An arrester, **characterized by** comprising:
an insulation sleeve having a conductor at a fore-end part,
an arrester elements stack inserted in an inside of said insulation sleeve through a high-voltage electrode,
an earthed electrode arranged at a rear-end part side of said arrester elements stack,
a coil-shaped spring arranged at a rear-end part side of said earthed electrode concentrically to said insulation sleeve,
a metal case surrounding said insulation sleeve, said earthed electrode and said spring, and
a sealing member installed at an opening part of a rear-end part side of said metal case,
wherein an outer diameter of a rear-endpart side of said insulation sleeve is smaller than an outer diameter of a center part side of said insulation sleeve, and
an outer peripheral surface of said insulation sleeve touches an inner peripheral surface of said metal case.

4. An arrester, **characterized by** comprising:
an insulation sleeve having a conductor at a fore-end part,
an arrester elements stack inserted in an inside of said insulation sleeve through a high-voltage electrode,
an earthed electrode arranged at a rear-end part side of said arrester elements stack,
a coil-shaped spring arranged at a rear-end part side of said earthed electrode concentrically to said insulation sleeve,
a metal case surrounding said insulation sleeve, said earthed electrode and said spring, and
a sealing member installed at an opening part of a rear-end part side of said metal case,
wherein an outer diameter of a rear-end part side of said insulation sleeve is smaller than an outer diameter of a center part side of said insulation sleeve, and
an inclusion for embedding a gap between an inner peripheral surface of said metal case and an outer peripheral surface of said insulation sleeve is provided at an outer circumference of said insulation sleeve.

5. An arrester according to any one of claim 1 to claim 4, **characterized in that:**
a tapered outer surface whose diameter enlarges gradually toward the direction of a rear-end part of said insulation sleeve is provided at an outer circumference of a fore-end part of said insulation sleeve, and
a bell mouth part for easing electric field is provided at a consecutively-installed part of said tapered outer surface and a large diameter part which is provided at an outer circumference of a center part of said insulation sleeve.

6. An arrester according to any one of claim 1 to claim 4, **characterized in that:**
a funnel-shaped tapered outer surface whose diameter enlarges gradually toward a direction of a fore-end part of said insulation sleeve is provided at a consecutively-installed part of a large diameter part of said insulation sleeve and a rear-end part of said insulation sleeve.

7. An arrester, **characterized by** comprising:
an insulation sleeve having a conductor at a fore-end part,
an arrester elements stack inserted in an inside of said insulation sleeve through a high-voltage electrode,
an earthed electrode arranged at a rear-end part side of said arrester elements stack,
a coil-shaped spring arranged at a rear-end part side of said earthed electrode concentrically to said insulation sleeve,
a metal case surrounding said insulation sleeve, said earthed electrode and said spring, and
a sealing member installed at an opening part of a rear-end part side of said metal case,
wherein an outer diameter of a rear-end part side of said insulation sleeve is smaller than an outer diameter of a center part side of said insulation sleeve,
a funnel-shaped tapered outer surface whose diameter enlarges gradually toward a direction of a fore-end part of said insulation sleeve is provided at a consecutively-installed part of a large diameter part of said insulation sleeve and a rear-end part of said insulation sleeve,
a funnel-shaped tapered inner surface whose diameter enlarges gradually toward a direction of a fore-end part of said metal case is provided at an inner peripheral surface of a consecutively-installed part of a center part of said metal case and a rear-end part of said metal case, and
the tapered inner surface of said metal case touches the tapered outer surface of said insulation sleeve.

8. An arrester, **characterized by** comprising:
an insulation sleeve having a conductor at a fore-end part,
an arrester elements stack inserted in an inside of said insulation sleeve through a high-voltage electrode,
an earthed electrode arranged at a rear-end part side of said arrester elements stack,
a coil-shaped spring arranged at a rear-end part side of said earthed electrode concentrically to said insulation sleeve,
a metal case surrounding said insulation sleeve, said earthed electrode and said spring, and
a sealing member installed at an opening part of a rear-end part side of said metal case,
wherein an annular locking part which is perpendicular to an axis line and extends toward a center direction is provided at an opening part of a rear-end part side of said metal case, and
a rear-end part of said spring touches a surface facing said earthed electrode of said locking part.

9. An arrester, **characterized by** comprising:
an insulation sleeve having a conductor at a fore-end part,
an arrester elements stack inserted in an inside of said insulation sleeve through a high-voltage electrode,
an earthed electrode arranged at a rear-end part side of said arrester elements stack,
a coil-shaped spring arranged at a rear-end part side of said earthed electrode concentrically to said insulation sleeve,
a metal case surrounding said insulation sleeve, said earthed electrode and said spring, and
a sealing member installed at an opening part of a rear-end part side of said metal case,
wherein an annular locking part which is perpendicular to an axis line and extends toward a center direction is provided at an opening part of a rear-end part side of said metal case,
a rear-end part of said spring touches a surface facing said earthed electrode of said locking part,
said sealing member is provided with a lid member which is installed in the air tight at an inner circumference of said locking part and a pressure discharge plate which is arranged at a side facing said earthed electrode of said lid member, and
an inner diameter of said spring is larger than an outer diameter of said pressure discharge plate.

10. An arrester, **characterized by** comprising:
an insulation sleeve having a conductor at a fore-end part,
an arrester elements stack inserted in an inside of said insulation sleeve through a high-voltage electrode,
an earthed electrode arranged at a rear-end part side of said arrester elements stack,
a coil-shaped spring arranged at a rear-end part side of said earthed electrode concentrically to said insulation sleeve,
a metal case surrounding said insulation sleeve, said earthed electrode and said spring, and
a sealing member installed at an opening part of a rear-end part side of said metal case,
wherein an annular locking part which is perpendicular to an axis line and extends toward a center direction is provided at an opening part of a rear-end part side of said metal case,
a rear-end part of said spring touches a surface facing said earthed electrode of said locking part,
said sealing member is provided with a lid member which is installed in the air tight at an inner circumference of said locking part and a pressure discharge plate which is arranged at a side facing said earthed electrode of said lid member,
an inner diameter of said spring is larger than an outer diameter of said pressure discharge plate, and
a slit or a notch is provided at a part of said pressure discharge plate.

11. An arrester according to any one of claim 8 to claim 10, **characterized in that:**
a columnar boss part is protruded facing a side of said sealing member concentrically to said insulation sleeve at a side facing said sealing member of said earthed electrode, and
a fore-end part side of said spring is attached at an outer circumference of said boss part.

12. An arrester according to any one of claim 8 to claim 10, **characterized in that:**
a conductive member is connected electrically between said earthed electrode and said metal case.

13. An arrester according to any one of claim 8 to claim 10, **characterized in that:**
a coil-shaped spring is arranged between a rear-end part of said conductor and a fore-end part of said high-voltage electrode.

14. An arrester, **characterized by** comprising:
an insulation sleeve having a conductor at a fore-end part,
an arrester elements stack inserted in an inside of said insulation sleeve through a high-voltage electrode, and
an earthed electrode arranged at a rear-end part side of said arrester elements stack,
wherein a tapered outer surface whose diameter enlarges gradually toward a direction of a rear-end part of said conductor with predefined tapered angle is provided at a outer circumference of said conductor.

15. An arrester, **characterized by** comprising:
an insulation sleeve having a conductor at a fore-end part,
an arrester elements stack inserted in an inside of said insulation sleeve through a high-voltage electrode,
an earthed electrode arranged at a rear-end part side of said arrester elements stack,
a coil-shaped spring arranged at a rear-end part side of said earthed electrode concentrically to said insulation sleeve,
a metal case said insulation sleeve, said earthed electrode and said spring, and
a sealing member installed at an opening part of a rear-end part side of said metal case,
wherein a tapered outer surface whose diameter enlarges gradually toward a direction of a rear-end part of said conductor with predefined tapered angle is provided at a outer circumference of said conductor.

16. An arrester according to claim 14 or claim 15, **characterized in that:**
a tapered outer surface whose diameter enlarges gradually toward a direction of a rear-end part of said insulation sleeve with predefined tapered angle is provided at a outer circumference of a fore-end part of said insulation sleeve.

17. An arrester, **characterized by** comprising:
an insulation sleeve having a conductor at a fore-end part,
an arrester elements stack inserted in an inside of said insulation sleeve through a high-voltage electrode,
an earthed electrode arranged at a rear-end part side of said arrester elements stack,
a coil-shaped spring arranged at a rear-end part side of said earthed electrode concentrically to said insulation sleeve,
a metal case surrounding said insulation sleeve, said earthed electrode and said spring, and
a sealing member installed at an opening part of a rear-end part side of said metal case,
wherein a tapered outer surface whose diameter enlarges gradually toward a direction of a rear-end part of said conductor with predefined tapered angle is provided at a outer circumference of said conductor,
a tapered outer surface whose diameter enlarges gradually toward a direction of a rear-end part of said insulation sleeve with predefined tapered angle is provided at a outer circumference of a fore-end part of said insulation sleeve, and
a tapered angle of said conductor is almost equivalent to a tapered angle of said insulation sleeve.

18. An arrester, **characterized by** comprising:
an insulation sleeve having a conductor at a fore-end part,
an arrester elements stack inserted in an inside of said insulation sleeve through a high-voltage electrode,
an earthed electrode arranged at a rear-end part side of said arrester elements stack,
a coil-shaped spring arranged at a rear-end part side of said earthed electrode concentrically to said insulation sleeve,
a metal case surrounding said insulation sleeve, said earthed electrode and said spring, and
a sealing member installed at an opening part of a rear-end part side of said metal case,
wherein a tapered outer surface whose diameter enlarges gradually toward a direction of a rear-end part of said conductor with redefined tapered angle is provided at a outer circumference of said conductor, and
a tapered angle of said conductor is almost equivalent to a tapered angle of a receiving port of a fixed bushing that a fore-end part of said insulation sleeve is installed.

19. An arrester according to any one of claim 14, claim 15, claim 17 or claim 18, **characterized in that:**
a receipt hole for housing a spring is provided at least at any one of a side facing said high-voltage electrode of said conductor and a side facing said conductor of said high-voltage electrode.

20. An arrester according to any one of claim 14, claim 15, claim 17 and claim 18, **characterized in that:**
a plug is installed at an outer circumference of a fore-end part of said conductor.
